# EUROPÄISCHE PATENTSCHRIFT

(11) **EP 0 482 285 B1**
(45) Veröffentlichungstag und Bekanntmachung des Hinweises auf die Patenterteilung: **19.01.1994**
(21) Anmeldenummer: 91106094.5
(22) Anmeldetag: 17.04.1991
(51) Int. Cl.: F02D 11/10, F16D 1/08, F16D 1/10

(54) **Arretierungsvorrichtung**
Locking device
Dispositif d'arrêt

(30) Priorität: 24.10.1990 DE 4033803
(43) Veröffentlichungstag der Anmeldung: 29.04.1992
(73) Patentinhaber: VDO Adolf Schindling AG, D-60487 Frankfurt (DE)
(72) Erfinder: Ganser, Otmar, W-6230 Frankfurt/Main 80 (DE)
(74) Vertreter: Klein, Thomas, Dipl.-Ing. (FH)

(56) Entgegenhaltungen:
- EP-A- 306 641
- EP-A- 341 659
- EP-A- 0 123 083
- WO-A-91/02891
- DE-A- 3 912 843
- FR-A- 2 585 409
- US-A- 2 744 396

## Beschreibung

Die Erfindung bezieht sich auf eine Arretiervorrichtung für die Lastverstelleinrichtung einer Brennkraftmaschine nach dem Oberbegriff der Ansprüche 1 und 5.

Lastverstelleinrichtungen dieser Art sind aus der EP-A-306 641 und der EP-A-341 659 bekannt. Diese Druckschriften enthalten allerdings keine Angaben darüber, wie die Kupplungsteile mit der Drosselklappenwelle verbunden sind. Insoweit könnte der Fachmann auf die US-A-2 744 396 zurückgreifen, die sich ganz allgemein auf die Befestigung von Zahnrädern und anderen scheibenförmigen Drehteilen mit ihrer Drehwelle befaßt und drei verschiedene Ausführungsformen vorschlägt.

Bei allen Vorschlägen wird ein quer durch die Drehwelle gesteckter Kupplungsstift benutzt, der mittels Klemmeinrichtungen in einer V-förmigen Ausnehmung des Drehteils gehalten wird. Die Klemmeinrichtung kann aus zwei elastischen Drahtbügeln bestehen, die den Kupplungsstift übergreifen und sich endseitig im Drehteil abstützen. Sie kann auch als Klemmring ausgebildet sein, der sich auf der Drehwelle abstützt und das Drehteil gegen den Kupplungsstift anpreßt. Schließlich kann die Klemmvorrichtung auch von einer Tellerfeder gebildet werden, die axial durch einen in eine Nut der Drehwelle eingreifenden Sprengring gehalten wird und das Drehteil gegen den Kupplungsstift anpreßt.

Bei allen bekannten Ausführungsformen besteht für die Klemmeinrichtungen in axialer Richtung ein gewisser Platzbedarf, der über die axiale Erstreckung des Drehteils hinausgeht. Außerdem ist die Montage zumindest beim ersten Ausführungsbeispiel nicht ganz einfach und erfordert bei allen Beispielen einen gewissen axialen Spielraum und Zugang.

Diese Gestaltungsfreiheiten sind bei Lastverstelleinrichtungen der hier interessierenden Art nicht immer gegeben. Vielfach sind die Platzverhältnisse so beengt, daß die Befestigung der Kupplungsteile nicht mehr Platz beanspruchten darf als die axiale Erstreckung der Kupplungsteile. Wegen der Justierung anderer Bauteile und mangels stabiler Widerlager sind auch die bei der Herstellung der Befestigung aufzubringenden Kräfte in Grenzen zu halten.

Es besteht somit die Aufgabe, für die Lastverstelleinrichtung einer Brennkraftmaschine der eingangs genannten Art eine Arretiervorrichtung vorzuschlagen, bei der das bekannte Prinzip mit Kupplungsstift und Klemmvorrichtung anwendbar ist und bei der die Nachteile der aus der US-A-2 744 396 bekannten Lösungen vermieden werden können. Insbesondere sollen die Kupplungsteile bei möglichst flacher Bauweise verdrehsicher und ohne Radialspiel auf der Welle zu befestigen sein.

Zur Lösung dieser Aufgabe wird eine Klemmvorrichtung vorgeschlagen, die gekennzeichnet ist durch
- ein mit der Kupplungsplatte verbundenes Federblech,
- einen zwischen Kupplungsplatte und Federblech angeordneten Zwischenraum für die Aufnahme des Kupplungsstiftes sowie
- zwei Paare von sich diametral gegenüberliegenden Klemmfingern, die
   = seitlich durch kreisringförmige oder tangentiale Schnitte im Federblech begrenzt sind,
   = endseitig parallel zur Längserstreckung des Kupplungsstiftes verlaufende Stirnkanten aufweisen und deren
   = endseitige Bereiche in Richtung auf die Kupplungsplatte abgebogen sind.

Zweckmäßige Weiterbildungen dieser Klemmvorrichtung sind in den Ansprüchen 2 bis 4 beschrieben.

Eine alternative Lösung der Aufgabe ist in Anspruch 5 beschrieben; sie kann durch die Merkmale der Ansprüche 6 und 7 ausgestaltet werden.

Weitere Einzelheiten werden anhand der in denFig. 1 bis 5 dargestellten Ausführungsbeispiele erläutert. Es zeigen:
- Figur 1: einen Längsschnitt durch eine Kupplung und eine Drosselklappenwelle einer Lastverstelleinrichtung mit einer Kupplungsplatte, mit der die Kupplung mit der Drosselklappenwelle drehfest verbunden ist,
- Figur 2: einen Längsschnitt der Kupplungsplatte entlang der Linie A-B gemäß Figur 3, wobei einzelne Teile der Einfachheit halber weggelassen sind.
- Figur 3: eine Draufsicht der Kupplungsplatte,
- Figur 4: ein weiteres Ausführungsbeispiel der Klemmvorrichtung kurz vor der Einführung des Klemmbolzens,
- Figur 5: die Klemmvorrichtung mit dem Klemmbolzen in seiner Arretierungsstellung.

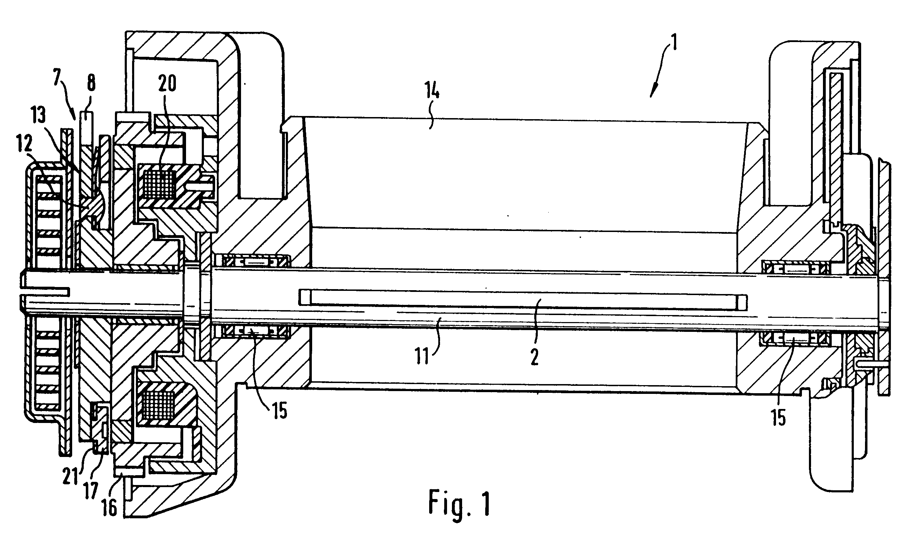

Das in Figur 1 dargestellte Stellglied ist Teil einer Lastverstelleinrichtung 1, wobei Teile der Lastverstelleinrichtung zur besseren Darstellung der erfindungswesentlichen Teile der Einfachheit halber weggelassen sind. Zur Lastverstelleinrichtung 1 gehört ein in der Zeichnung nicht dargestellter Elektromotor, der über ein nur schematisch angedeutetes Getriebe 7 mit einer Drosselklappenwelle 11 antriebsmäßig verbunden ist. Über das Getriebe 7 werden die Stellkräfte des Elektromotors zur Drosselklappe 2 übertragen, und dadurch wird eine Verstellung in die gewünschte Position herbeigeführt.

Wie aus Figur 1 hervorgeht, kann die Lastverstelleinrichtung 1 über ein in der Zeichnung nicht dargestelltes Fahrpedal verstellt werden, wobei durch Betätigung des Fahrpedals ein Hebel der Lastverstelleinrichtung 1 zwischen einem Leerlaufanschlag und einem Vollastanschlag verschoben und über eine Rückzugfeder in Leerlaufrichtung vorgespannt werden kann. Das Fahrpedal ist mittels eines Gaszugs an einen Mitnehmer und somit an die Drosselklappenwelle 11 angeschlossen, so daß bei Betätigung des Fahrpedals der Mitnehmer in Richtung des Vollastanschlags verschoben wird. An den Mitnehmer sind Rückstellfedern angeschlossen, die diesen in Leerlaufrichtung vorspannen.

Die Lastverstelleinrichtung 1 weist neben dem in der Zeichnung nicht dargestellten Elektromotor ein Getriebe 7 auf, das über eine Kupplung 13 mit der Drosselklappenwelle 11 antriebsverbindbar ist.

Wie aus Figur 1 hervorgeht, erstreckt sich die Drosselklappenwelle 11 durch einen Drosselklappenstutzen 14, der Teil eines in der Zeichnung nicht dargestellten Drosselklappengehäuses ist. Die Drosselklappenwelle 11 ist durch zwei Nadellager 15 in dem Gehäuse der Drosselklappenwelle 11 drehbar gelagert.

Der Antrieb der Drosselklappenwelle 11 erfolgt über ein Antriebszahnrad 16, das mit dem Elektromotor antriebsverbunden ist. Das Antriebszahnrad 16 ist drehbar auf der Drosselklappenwelle 11 gelagert und über einen Kupplungsrotor 17 und eine Federplatte 21 mit einer Kupplungsplatte bzw. Polplatte 8 drehfest mit der Drosselklappenwelle 11 verbindbar.

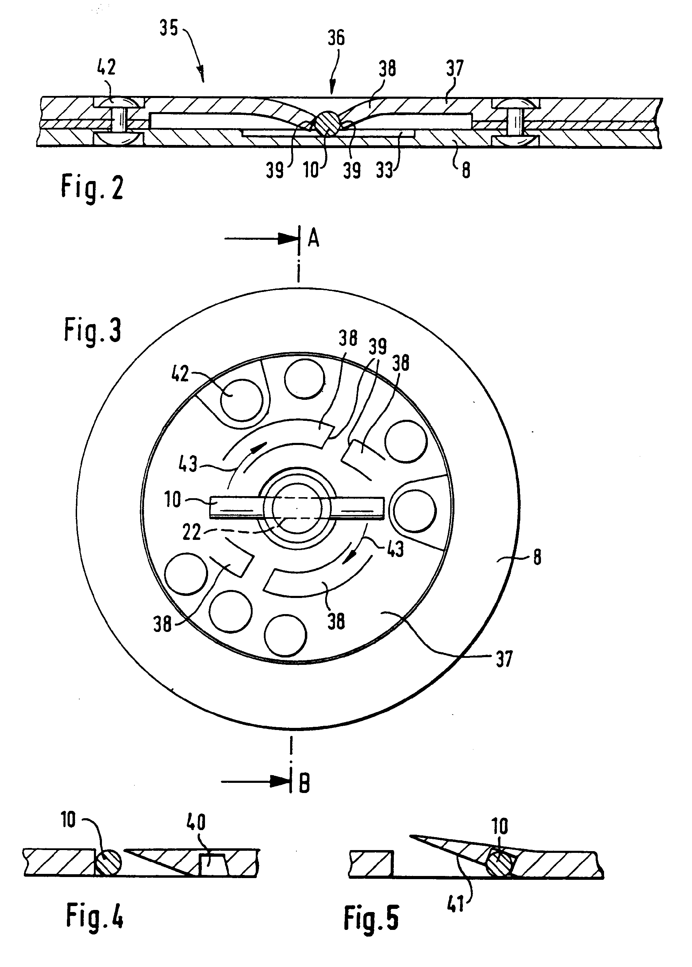

Die Kupplungsplatte 8 ist in den Figuren 2,3,4 näher veranschaulicht. Die Kupplungsplatte 8 ist, wie aus Figur 1 hervorgeht, über zahlreiche Niete 12 mit dem Kupplungsrotor 17 derart verbunden, daß in einem kleinen Bereich der Kupplungsrotor 17 axial verschoben werden kann, wenn die zur Kupplung 13 gehörende Magnetspule 20 bestromt wird. Diese zieht dann über den Kupplungsrotor 17 die Kupplungsplatte 8 an, so daß sich diese gegen die Stirnfläche des Kupplungsrotors 17 anlegt. Hierdurch kommt eine reibschlüssige Verbindung zwischen der Kupplungsplatte 8, dem Kupplungsrotor 17 und dem in der Zeichnung nicht dargestellten Elektromotor zur Verstellung der Drosselklappenwelle 11 zustande.

Wie aus Figur 2 und 3 hervorgeht, ist die Kupplungsplatte 8 über einen Kupplungsstift 10 mit der Drosselklappenwelle 11 drehfest verbunden. Die Kupplungsplatte 8 weist zur Aufnahme des Kupplungsstiftes 10 eine längliche Öffnung 33 und die Drosselklappenwelle 11 eine Bohrung 22 auf, in die der Kupplungsstift 10 eingeführt wird, um auf diese Weise eine Antriebsverbindung zwischen der Kupplung 13 und der Drosselklappenwelle 11 herzustellen. Durch die Verwendung eines Kupplungsstiftes 10 können die Verbindungskräfte bzw. Anpresskräfte zur Drehverbindung zwischen Kupplung 13 und Drosselklappenwelle 11 sehr klein gehalten werden. Außerdem ist eine Vormontage der Kupplung 13 auf der Drosselklappenwelle 11 möglich.

Der Kupplungsstift 10 läßt sich in der Bohrung 22 der Drosselklappenwelle 11 mittels einer Klemmvorrichtung 35 sichern. Die Klemmvorrichtung 35 ist im Ausführungsbeispiel als Federblech 37 ausgebildet. Die Klemmvorrichtung 35 besteht aus dem auf der Kupplungsplatte 8 befestigten Federblech 37, das über zahlreiche Niete 42 mit der Kupplungsplatte 8 verbunden ist.

In dem Federblech 37 befinden sich Klemmfinger 38, die paarweise angeordnet sind. Diametral gegenüber diesen Klemmfingern 38 liegen zwei weitere, paarweise angeordnete Klemmfinger 38. Das Federblech 37 bildet mit den einzelnen Klemmfingern eine Art Bajonettverschluß zur Festsetzung des Kupplungsstiftes 10.

Die Klemmfinger 38 sind zumindest teilweise herausgestanzt und einenends einteilig mit dem Federblech 37 verbunden. Sie weisen anderenends Stirnkanten 39 auf, die in der Endlagestellung des Kupplungstiftes 10 gegen die Oberfläche des Kupplunggstiftes 10 anliegen und somit die Kupplungsplatte 8 axial sowie radial an der Drosselklappenwelle 11 sichern.

In vorteilhafter Weise bilden die gegenüberliegenden Stirnkanten 39 der Klemmfinger 38 einen in Richtung der Oberfläche geöffneten Winkel. Die Stirnkanten 39 erstrecken sich parallel zur Längsmittelachse des Kupplungsstiftes 10. Hierdurch wird nach der Montage der Kupplungsplatte 8 diese auf einfache Weise auf der Drosselklappenwelle 11 festgesetzt. Durch die nach unten abgewinkelten Klemmfinger 38 und die schräg verlaufenden Stirnkanten 39 wird der Kupplungsstift 10 in eingebautem Zustand auf einfache Weise gegen die Oberfläche der Kupplungsplatte 8 gedrückt.

In der Kupplungsplatte 8 befindet sich eine längliche Öffnung 33, die etwas größer ist als der Kupplungsstift 10 und der Außendurchmesser der Drosselklappenwelle 11. Auf diese Weise läßt sich die zumindest zum Teil vormontierte Kupplung 13 auf der Drosseklappenwelle 11 montieren. Die Kupplungsplatte 8 wird dann auf die Drosselklappenwelle 11 aufgeschoben, bis der Klemmteil 36 den auf der Drosselklappenwelle 11 bereits montierten Kupplungsstift 10 aufnimmt. Bei der Montage der Kupplungsplatte 8 wird diese zuerst mit der Öffnung 33 über den Kupplungstift 10 geschoben (siehe Figur 3), dann wird die Kupplungsplatte 8 gemäß Pfeil 43 soweit gedreht, bis der Kupplungsstift 10 zwischen den gegenüberliegenden Stirnkanten 39 einrastet. Hierdurch ist die Montage der Kupplungsplatte abgeschlossen.

Gemäß einem weiteren Ausführungsbeispiel können die Klemmfinger 38 bzw. zumindest ein Klemmfinger 38 mit einer den Kupplungstift 10 übergreifenden Aussparung 40 versehen. Die Aussparung 40 erfüllt dabei die gleiche Funktion wie die beiden gegenüberliegenden Stirnkanten 39 der Klemmfinger 38. Um den Einführungsvorgang des Kupplungsbolzens 10 in die Aussparung 40 zu erleichtern, weist der Klemmfinger 38 an seinem der Anschlußstelle gegenüberliegenden freien Ende eine mit Bezug auf die Oberfläche der Kupplungsplatte 8 geneigt verlaufende Führungsfläche 41 auf.

### Bezugszeichenliste

- 1: Lastverstelleinrichtung
- 2: Drosselklappe
- 3: Schenkel
- 4: Schenkel
- 5: Nut (Aussparung)
- 6: Stift
- 7: Getriebe
- 8: Kupplungsplatte
- 9: Abdeckplatte
- 10: Kupplungsstift
- 11: Drosselklappenwelle
- 12: Niet
- 13: Kupplung
- 14: Drosselklappenstutzen
- 15: Nadellager
- 16: Antriebszahnrad
- 17: Kupplungsrotor
- 18: Arretierungselement
- 19: Feder
- 20: Magnetspule
- 21: Federplatte
- 22: Bohrung
- 33: längliche Öffnung
- 34: Kante (Nut)
- 35: Klemmvorrichtung
- 36: Klemmteil
- 37: Federblech
- 38: Klemmfinger
- 39: Stirnkante
- 40: Ausparung
- 41: Führungsfläche
- 42: Niet
- 43: Pfeil

## Patentansprüche

1. Arretiervorrichtung für die Lastverstelleinrichtung (1) einer Brennkraftmaschine, bei der
- eine Drosselklappe (2) mit einer im Drosselklappengehäuse gelagerten Drosselklappenwelle (11) drehfest verbunden ist,
- die Drosselklappenwelle (11) mittels einer Kupplung (13) durch einen Antriebsmotor drehbar ist
und wobei bei der Arretiervorrichtung
- ein aus einer Platte (8) bestehendes Kupplungsteil unter Verwendung eines quer durch die Drosselklappenwelle (11) gesteckten Kupplungsstiftes (10) und einer den Kupplungsstift (10) auf der Kupplungsplatte (8) festsetzenden Klemmvorrichtung (35) drehfest mit der Drosselklappenwelle (11) verbunden ist,
dadurch gekennzeichnet, daß die Klemmvorrichtung ausgebildet ist durch
- ein mit der Kupplungsplatte (8) verbundenes Federblech (37),
- einen zwischen Kupplungsplatte (8) und Federblech (37) angeordneten Zwischenraum für die Aufnahme des Kupplungsstiftes (10) sowie
- zwei Paare von sich diametral gegenüberliegenden Klemmfingern (38), die
= seitlich durch kreisringförmige oder tangen- tiale Schnitte im Federblech (37) begrenzt sind,
= endseitig parallel zur Längserstreckung des Kupplungsstiftes (10) verlaufende Stirnkanten (39) aufweisen und deren
= endseitige Bereiche in Richtung auf die Kupplungsplatte (8) abgebogen sind.

2. Arretiervorrichtung nach Anspruch 1, dadurch gekennzeichnet, daß jedes Paar der Klemmfinger (38) aus einem kürzeren, relativ starren Klemmfinger und einem längeren, relativ elastischen Klemmfinger besteht und daß die Klemmfinger gleicher Länge diametral gegenüberliegend angeordnet sind.

3. Arretiervorrichtung nach Anspruch 1 oder 2, dadurch gekennzeichnet, daß die Kupplungsplatte (8) oder das Federblech (37) eine Ausnehmung aufweist, die so bemessen ist, daß die Kupplungsplatte (8) bei eingesetztem Kupplungsstift (10) axial auf die Drosselklappenwelle (11) soweit aufgeschoben werden kann, bis der Kupplungsstift (10) im Zwischenraum zwischen Kupplungsplatte (8) und Federblech (37) liegt.

4. Arretierungsvorrichtung nach einem der Ansprüche 1 bis 3, dadurch gekennzeichnet, daß der Kupplungsstift (10) durch Drehung der Kupplungsplatte (8) relativ zur Drosselklappenwelle (11) unter elastischer Verformung der längeren Klemmfinger (38) an den Stirnkanten (39) der kürzeren Klemmfinger (38) zur Anlage gebracht werden kann und daß in dieser Position die längeren Klemmfinger (38) in ihrer Ausgangsposition zurückfedern, wodurch die Drosselklappenwelle (11) gegen Rückdrehen gesichert ist (Bajonettverschluß).

5. Arretiervorrichtung für die Lastverstelleinrichtung (1) einer Brennkraftmaschine, bei der
- eine Drosselklappe (2) mit einer im Drosselklappengehäuse gelagerten Drosselklappenwelle (11) drehfest verbunden ist,
- die Drosselklappenwelle (11) mittels einer Kupplung (13) durch einen Antriebsmotor drehbar ist
und wobei bei der Arretiervorrichtung
-ein aus einer Platte (8) bestehendes Kupplungsteil unter Verwendung eines quer durch die Drosselklappenwelle (11) gesteckten Kupplungsstiftes (10) und einer den Kupplungsstift (10) auf der Kupplungsplatte (8) festsetzenden Klemmvorrichtung (35) drehfest mit der Drosselklappenwelle (11) verbunden ist,
dadurch gekennzeichnet, daß die Klemmvorrichtung ausgebildet ist durch
- ein mit der Kupplungsplatte (8) verbundenes Federblech (37) mit einer zentralen, etwa kreisför- migen Ausnehmung und
- zwei am inneren Rand der Ausnehmung diametral genüberliegenden elastischen Klemmfingern (38), die
= seitlich durch kreisförmige oder tangentiale Schnitte im Federblech (37) begrenzt sind,
= zwischen sich und der Kupplungsplatte (8) einen sich keilförmig verjüngenden Zwischenraum bilden und
= auf ihrer zur Kupplungsplatte (8) weisenden Seite eine Aussparung (40) für die Aufnahme des Kupplungsstiftes (10) aufweisen.

6. Arretiervorrichtung nach Anspruch 5, dadurch gekennzeichnet, daß die Kupplungsplatte (8) eine Ausnehmung aufweist, die so bemessen ist, daß die Kupplungsplatte (8) bei eingesetztem Kupplungsstift (10) axial auf die Drosselklap- penwelle (11) aufschiebbar ist, bis der Kupplungsstift (10) im Zwischenraum zwischen der Kupplungsplatte (8) und dem vorderen Ende der Klemmfinger (38) liegt.

7. Arretiervorrichtung nach Anspruch 5 oder 6, dadurch gekennzeichnet, daß der Kupplungsstift (10) durch Drehung der Kupplungsplatte (8) relativ zur Drosselklappenwelle (11) unter elastischer Verformung der Klemmfinger (38) in die Aussparung (40) eingerastet werden kann.

## Claims

1. Locking system for the load adjustment device (1) of an internal combustion engine, wherein
- a throttle (2) is non-rotatably connected to a throttle shaft (11) mounted in the throttle body,
- the throttle shaft (11) is adapted to be rotated by a drive motor by means of a clutch (13)
and where in respect of the locking system
- a clutch part consisting of a plate (8) is non-rotatably connected to the throttle shaft (11) using a clutch pin (10) pushed transversely through the throttle shaft (11) and a clamping device (35) which fixes the clutch pin (10) on the clutch plate (8),
characterised in that the clamping device is constructed from
- a spring plate (37) joined to the clutch plate (8),
- a gap disposed between the clutch plate (8) and the spring plate (37) to accommodate the clutch pin (10) and
- two pairs of diametrically opposed clamping fingers (38), which
= are delimited laterally by annulus-shaped or tangential incisions in the spring plate (37),
= have end faces (39) extending parallel to the longitudinal orientation of the clutch pin (10) and of which
= the portions at the ends are bent towards the clutch plate (8).

2. Locking system according to claim 1, characterised in that each pair of the clamping fingers (38) consists of one shorter, relatively rigid clamping finger and one longer, relatively elastic clamping finger, and that the clamping fingers of the same length are disposed so as to be diametrically opposed.

3. Locking system according to claim 1 or 2, characterised in that the clutch plate (8) or the spring plate (37) incorporates a recess of a size such that when the clutch pin (10) is inserted, the clutch plate (8) can be pushed axially onto the throttle shaft (11) until the clutch pin (10) is situated in the gap between the clutch plate (8) and the spring plate (37).

4. Locking system according to any of claims 1 to 3, characterised in that by rotating the clutch plate (8) relative to the throttle shaft (11) it is possible to bring the clutch pin (10) to bear on the end faces (39) of the shorter clamping fingers (38), at the same time elastically deforming the longer clamping fingers (38), and that in this position the longer clamping fingers (38) spring back into their starting position, thereby ensuring that the throttle shaft (11) cannot turn backwards (bayonet closure).

5. Locking system for the load adjustment device (1) of an internal combustion engine, wherein
- a throttle (2) is non-rotatably connected to a throttle shaft (11) mounted in the throttle body,
- the throttle shaft (11) is adapted to be rotated by a drive motor by means of a clutch (13)
and where in respect of the locking system
- a clutch part consisting of a plate (8) is non-rotatably connected to the throttle shaft (11) using a clutch pin (10) pushed transversely through the throttle shaft (11) and a clamping device (35) which fixes the clutch pin (10) on the clutch plate (8),
characterised in that the clamping device is constructed from
- a spring plate (37) with a central, roughly annulus-shaped recess, joined to the clutch plate (8), and
- two elastic clamping fingers (38) diametrically opposed on the inner rim of the recess, which fingers
= are delimited laterally by annulus-shaped or tangential incisions in the spring plate (37),
= constitute a cuneiformly tapering gap between themselves and the clutch plate (8) and
= on their side facing the clutch plate (8) have a recess (40) to receive the clutch pin (10).

6. Locking system according to claim 5, characterised in that the clutch plate (8) has a recess of a size such that when the clutch pin (10) is inserted, the clutch plate (8) can be pushed axially onto the throttle shaft (11) until the clutch pin (10) is situated in the gap between the clutch plate (8) and the front end of the clamping fingers (38).

7. Locking system according to claim 5 or 6, characterised in that by rotating the clutch plate (8) relative to the throttle shaft (11), the clutch pin (10) can be located in the recess (40), at the same time elastically deforming the clamping fingers (38).

## Revendications

1. Dispositif d'arrêt pour le dispositif de réglage (1) de la charge d'un moteur à combustion interne, dans lequel
- un papillon étrangleur (2) est solidaire en rotation d'un arbre (11) tourillonné dans la cage de ce papillon ;
- cet arbre (11) peut être entraîné en rotation par un moteur au moyen d'un accouplement (13) ; le dispositif d'arrêt comportant
- un élément d'accouplement composé d'un disque (8), qui est rendu solidaire en rotation de l'arbre (11) grâce à l'utilisation d'une broche d'accouplement (10) insérée perpendiculairement dans cet arbre (11) et d'un dispositif de blocage (35), qui immobilise cette broche (10) dans ce disque (8), dispositif d'arrêt caractérisé en ce que le dispositif de blocage est composé de
- une membrane métallique (37) élastique reliée au disque d'accouplement (8),
- un interstice ménagé entre ce disque (8) d'accouplement et cette membrane (37) pour loger la broche (10), ainsi que
- deux couples de doigts de blocage (38) diamé- tralement opposés, qui
sont délimités latéralement par des fentes annulaires ou tangentielles découpées dans la membrane (37),
comportent à leur extrémité une face frontale (39) paralléle à la longueur de la broche (10) et
dont les extrémités sont recourbées vers le disque d'accouplement (8).

2. Dispositif d'arrêt selon la revendication 1, caractérisé en ce que chaque couple de doigts de blocage (38) est composé d'un doigt (38) court et relativement rigide et d'un doigt long relativement élastique, et en ce que les doigts de même longueur sont diamétralement opposés.

3. Dispositif d'arrêt selon la revendication 1 ou 2, caractérisé en ce que le disque d'accouplement (8) ou la membrane élastique (37) présente un évidement qui a les dimensions voulues pour que, lorsque la broche d'accouplement (10) a été insérée dans ce disque (8), celui-ci puisse être repoussé axialement sur l'arbre (11) jusqu'à ce que cette broche (10) se trouve dans l'interstice qui sépare ledit disque (8) et la membrane (37).

4. Dispositif d'arrêt selon l'une des revendications 1 à 3, caractérisé en ce que la broche d'accouplement (10) peut être amenée à s'appliquer contre les faces frontales (39) des bras de blocage (38) courts, par une rotation du disque d'accouplement (8) par rapport à l'arbre (11) et déformation élastique des doigts (38) longs et en ce que, dans cette position, ces doigts (38) longs reviennent élastiquement à leur position initiale en empêchant l'arbre (11) de reculer (joint à baïonnette).

5. Dispositif d'arrêt pour le dispositif de réglage (1) de la charge d'un moteur à combustion interne dans lequel
- un papillon obturateur (2) est solidaire en rotation d'un arbre (11) tourillonné dans la cage de ce papillon,
- cet arbre (11) peut être entraîné par un moteur au moyen d'un accouplement (13), le dispositif de blocage comportant
- un élément d'accouplement, composé d'un disque (8), qui est rendu solidaire en rotation de l'arbre (11) grâce à l'utilisation d'une broche d'accouplement (10), insérée perpendiculairement dans cet arbre (11), et d'un dispositif de blocage (35) qui immobilise cette broche (10) sur ce disque (8),
dispositif d'arrêt caractérisé en ce que le dispositif de blocage est composé de
- une membrane métallique élastique (37) reliée au disque d'accouplement (8) et présentant un évidement central sensiblement circulaire, et
- deux doigts de blocage (38), qui sont disposés sur le bord intérieur de l'évidement et sont diamétralement opposés et qui
sont délimités par des fentes circulaires ou tangentielles découpées dans la membrane (37)
forment entre eux et le disque d'accouplement (8) un interstice qui se rétrécit en forme de coin ; et
comportent sur leur face adjacente à ce disque un évidement (40) destiné à loger la broche d'accouplement (10).

6. Dispositif d'arrêt selon la revendication 5, caractérisé en ce que le disque d'accouplement (8) comporte un évidement, qui a le diamètre voulu pour que, lorsque la broche (10) est insérée, ce disque (8) puisse coulisser axialement sur l'arbre (11) jusqu'à ce que cette broche (10) se trouve dans l'interstice compris entre ledit disque (8) et l'extrémité antérieure des doigts de blocage (38).

7. Dispositif d'arrêt selon la revendication 5 ou 6, caractérisé en ce que la broche d'accouplement (10) peut être encliquetée dans l'évidement (40) grâce à une rotation du disque d'accouplement (8) par rapport à l'arbre (11), avec déformation élastique des doigts de blocage (38).
